# EUROPEAN PATENT APPLICATION

(11) **EP 0 618 583 A2**
(43) Date of publication of application: **05.10.1994**
(21) Application number: 94104969.4
(22) Date of filing: 29.03.1994
(51) Int. Cl.: G11B 33/12

(54) **An assembly type disk storage board and an assembly type disk storage apparatus**

(30) Priority: 31.03.1993 JP 98572/93
(71) Applicant: FUJITSU LIMITED, Kawasaki-shi, Kanagawa 211 (JP)
(72) Inventor: Kaneko, Hisashi, c/o Fujitsu Limited, Kawasaki-shi, Kanagawa 211 (JP)
(74) Representative: Schmidt-Evers, Jürgen, Dipl.-Ing.

(57) **Abstract**

An assembly type disk storage board and an assembly type disk storage apparatus provided a plural of disk storage drives (1) are disclosed. This assembly type disk storage board has a support plate (2) mounted the plural disk storage drives, having a card edge connector (8a,8b) for connecting the plural disk storage drives to the external device. Further, an assembly type disk storage apparatus is provided a locker (9), a support plate (2) which is provided the plural disk storage drives (1) having a card edge connector (8a,8b) for connecting the plural disk storage drives to the external device, guides (10) provided on the locker to guide the support plate, a first connector (11) provided on the locker to connect with the card edge connector of the support plate, a first control board (51) provided the controller for controlling the plural disk storage drives, a second guide provided on the locker for guiding the control board, and a second connector (11) provided on the locker for connecting to the card edge connector of the control board.

## Description

### BACKGROUND OF THE INVENTION

### Field of the Invention

The present invention relates to an assembly type disk storage board and an assembly type disk storage apparatus which is provided a plural of disk storage drives to a sheet of support plate.

### Description of the Related Art

Recently, an assembly type disk storage apparatus, which is mounted a plural of disk drives, for example, a magnetic disk drive, an optical disk drive, an optical magnetic disk drive and the like, is high-lighted. This assembly type disk storage apparatus is used as an array disk apparatus for performing recording and reproducing which is operated the plural disk storage apparatuses in parallel. Further, the apparatus is used as a disk apparatus for improving more higher reliability by making the system in duplicate.

More particularly, the array disk apparatus presents an ever-increasing demand, as it becomes possible to make a processing of the computer system at high-speed. Such assembly type disk apparatus is required to reduce the size of the apparatus, have high effectiveness and reduce the cost.

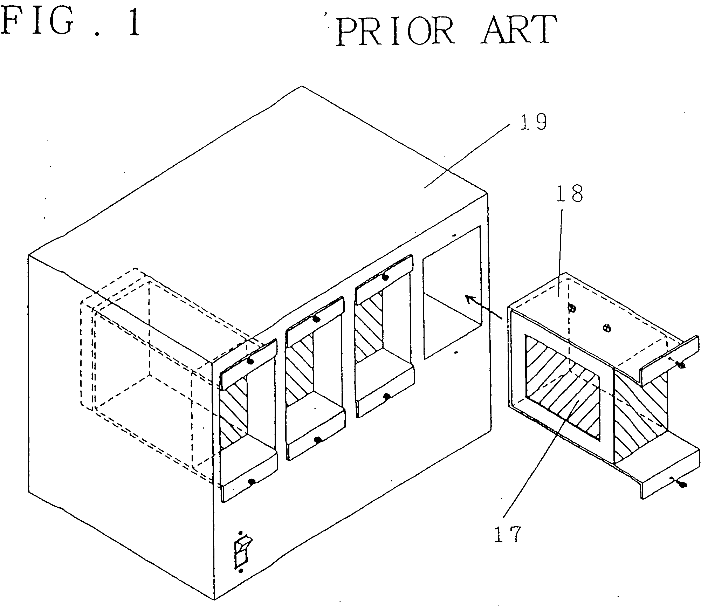

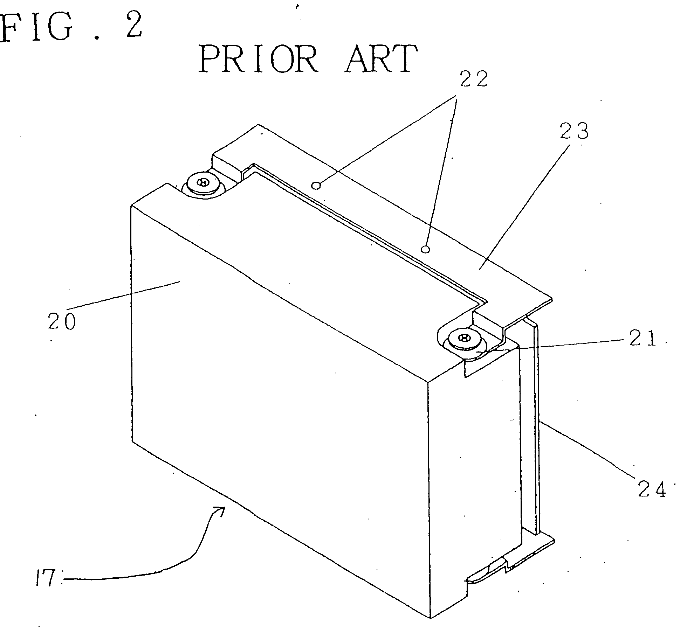

Fig. 1 is an explanatory diagram of a prior art and Fig. 2 is a structural diagram of the conventional disk drive.

As shown in Fig. 1, a sub flame 18 is mounted to each of magnetic disk apparatuses with screws. And the array disk apparatus is constituted by mounting these apparatuses into a system locker 19.

This magnetic disk apparatus 17 has a disk drive 20 including a magnetic disk, a magnetic head and an actuator, as shown in Fig. 2. And this disk drive 20 is mounted to a mounting flame 23 via vibration proof rubbers 21.

This mounting flame 23 supports the disk drive 20 via the vibration proof rubbers 21. This flame 23 has screw holes 22 for mounting the flame 23 to the sub flame 18. This vibration proof rubber 21 is to buffer the vibration of the inside and outside of the disk drive 20. Further, a control printed circuit board 24 which is mounted a controller for controlling the disk drive 20 and recording and reproducing information is provided on the disk drive 20.

In this way, the conventional array disk apparatus mounts the disk apparatus 20 to the mounting flame 23 via the vibration proof rubbers 21. The conventional apparatus is constituted so as that the sub flame 18 is mounted to the system locker 19 with screws, after mounting this apparatus to the sub flame 18.

However, in the prior art, it is required to take an space for mounting to the system locker 19, because each of magnetic disk apparatuses 17 are mounted to the system locker 19, respectively, thus making the apparatus a larger size.

Further, the apparatus which is mounted the mounting flame and the sub flame to each of magnetic disk apparatuses 17, is mounted to the system locker, the mounting space of the magnetic disk apparatus increases, thus making the apparatus a larger size.

Furthermore, each of magnetic disk apparatuses 17 which are mounted the mounting flame and the sub flame are mounted to the system locker, so that it is required to have a number of materials and it takes much time, thus costing a great deal.

### SUMMARY OF THE INVENTION

Accordingly, it is an object of the present invention to provide an assembly type disk storage board and an assembly type disk storage apparatus, in which the apparatus is made a compact, even if the plural disk storage drives are fixed.

It is a further object of the present invention to provide an assembly type disk storage board and an assembly type disk storage apparatus, in which the apparatus fixed a plural of disk drives is improved at the low cost.

An assembly type disk storage board of the present invention has a plurality of disk storage drives, each disk storage drive having a rotating storage disk, a head for reproducing date from said storage disk, and an actuator for positioning said head with respect to said storage disk, a support plate mounting said plural disk storage drives and having a connector which connects said plural disk storage drives to the external device.

An assembly type disk storage apparatus of the present invention has a locker having a first connector and a guide; a plurality of disk storage drives, each disk storage drive having a rotating storage disk, a head for reproducing data from said storage disk, and an actuator for positioning said head with respect to said storage disk, a support plate being mounted on the guide, for mounting drives, and having second connector which connects with the first connector, guides provided on said locker to guide said support plate, and a connector provided on said locker to connect with said card edge connector of said support plate.

The present invention is constituted so as to mount the support plate to be mounted the plural disk storage drives to the apparatus. Thus, it becomes possible to reduce the space of each disk storage apparatus. Further, it becomes possible to reduce the mounting space, because it is not required the mounting flames and the like. Therefore, it becomes possible to reduce the size of this assembly type disk storage apparatus.

Further, it becomes possible to reduce the number of materials, and reduce the time requiring for mounting at the same time, because it is not required the mounting flames and the like. Therefore, it is possible to realize the apparatus which is a low cost. Further, the card edge connector is provided to the support plate, so that it becomes possible to connect electrically to the external portion with the support plate. Thus, it becomes possible to mount by inserting the board.

Other features and advantages of the present invention will become readily apparent from the following description taken in conjunction with the accompanying drawings.

### BRIEF DESCRIPTION OF THE DRAWINGS

The accompanying drawings, which are incorporated in and constitute a part of the specification, illustrate presently preferred embodiments of the invention, and together with the general description given above and the detailed description of the preferred embodiments given below, serve to explain the principle of the invention.

Fig. 1 is an explanatory diagram of a prior art.

Fig. 2 is an explanatory diagram of the conventional disk drive.

Fig. 3 is a perspective view of the embodiment of the disk storage board of the present invention.

Fig. 4 is a top view of the structure of Fig. 3.

Fig. 5 is a rear view of the structure of Fig. 3.

Fig. 6A is a structural diagram of the magnetic disk drive as shown in Fig. 3.

Fig. 6B is an explanatory diagram showing the position of the center of gravity of the magnetic disk drive of Fig. 6A.

Fig. 7 is a cross section showing the outline of the structure of Fig. 3.

Fig. 8 is a perspective view showing the modification of the disk storage board of the present invention.

Fig. 9 is a block diagram showing the embodiment of the array disk apparatus of the present invention.

Fig. 10 is a perspective view of the array disk apparatus of the embodiment of Fig. 9.

Fig. 11 is a cross section showing other modification of the disk storage board of the present invention.

Fig. 12 is a perspective view showing other modification of the disk storage board of the present invention.

Fig. 13 is a top view of the structure of Fig. 12.

Fig. 14 is a cross section showing the outline of structure of Fig. 12.

Fig. 15 is a perspective view showing the modification of the array disk apparatus of the present invention.

### DETAILED DESCRIPTION OF THE PREFERRED EMBODIMENTS

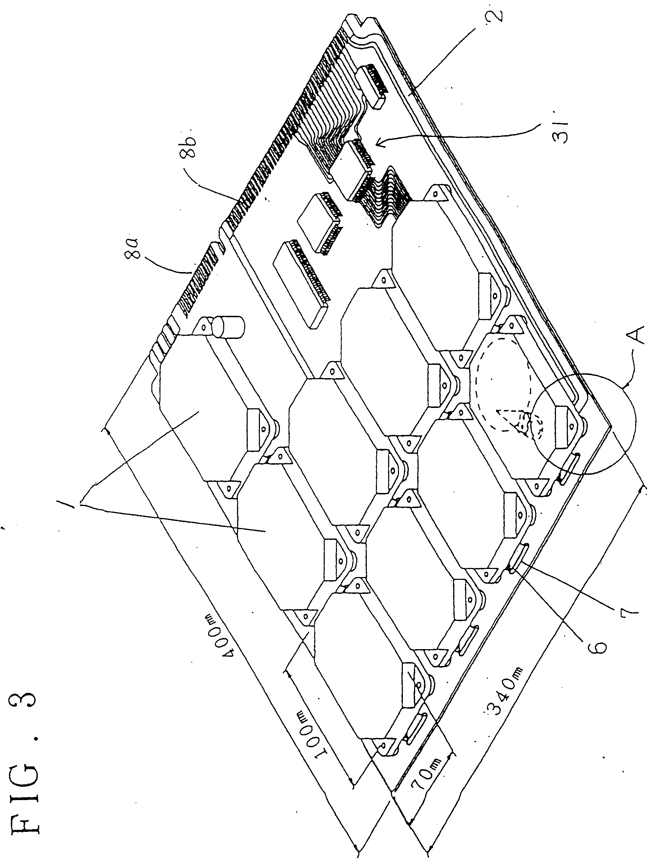

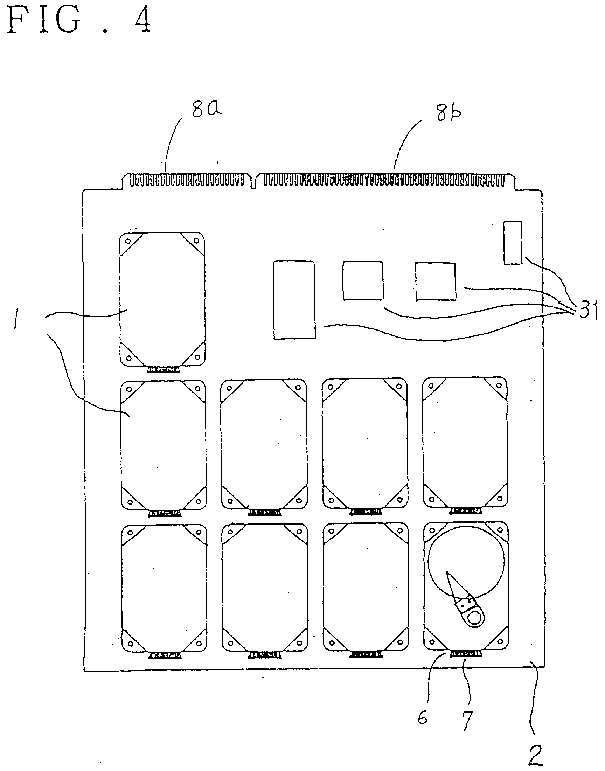

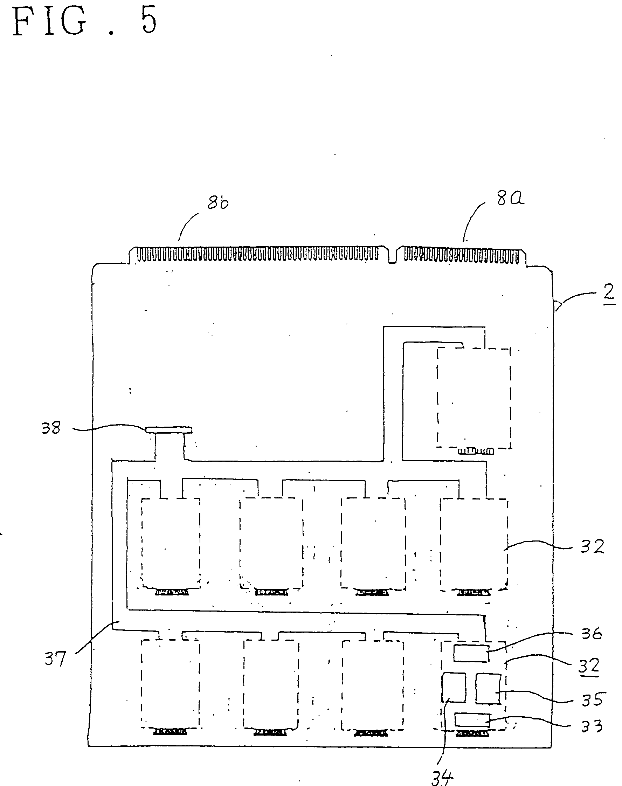

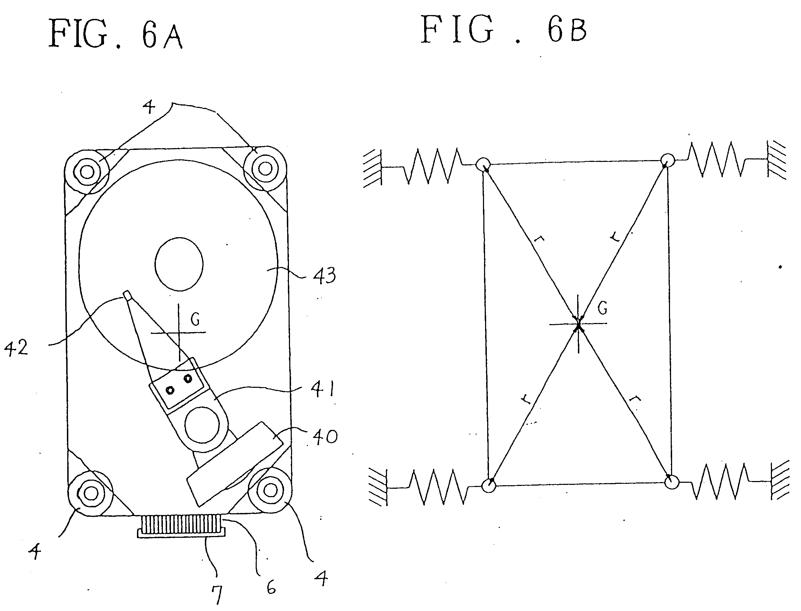

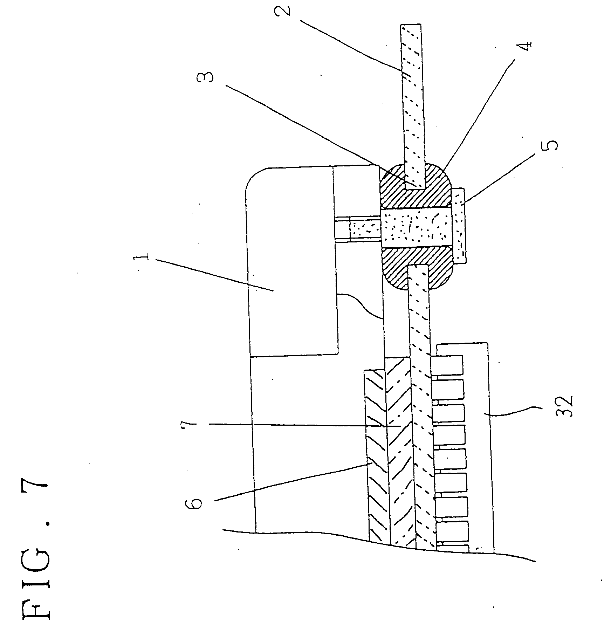

Fig. 3 is a perspective view of the disk storage board of the present invention, Fig. 4 is a top view of the structure of Fig. 3, Fig. 5 is a rear view of the structure of Fig. 3, Fig. 6A is a structural diagram of the magnetic disk drive of Fig. 3, Fig. 6B is an explanatory diagram showing the position of the center of gravity of the magnetic disk drive of Fig. 6A and Fig. 7 is an A-cross sectional diagram of the structure of Fig. 3.

As shown in Fig. 3, the magnetic disk drive 1 is a magnetic disk drive of 2.5 inch, which is 100 mm long, 70 mm wide and 19 mm in thickness. And the weight of this magnetic disk drive 1 is about 210 g and the storage capacity of the drive 1 is 209 M byte. Further, this magnetic disk drive 1 has a rotating magnetic disk 43, a magnetic head 42 which reads out a information of the magnetic disk 43 and writes the information, an actuator 41 for positioning the magnetic head 42 in the direction of a radius of the magnetic disk 43 and the magnetic circuit 40, as shown in Fig. 6A.

As shown in Fig. 3, a printed circuit board (a support plate) 2 is 400 mm long, 340 mm wide and 20 mm in thickness.

That is, the printed circuit board 2 has enough size to mount a plural of magnetic disk drives 1 having the the above-described size. As shown in Figs. 3 and 4, the nine magnetic disk drives 1 are mounted in this printed circuit board 2. The printed circuit board 2 has card edge connectors 8a and 8b for connecting electrically with the external portion at one end. Further, the printed circuit board 2 is mounted the interface circuit 31 for said magnetic disk drives 1.

As shown in Fig. 7, the holes 3 for fitting the vibration proof rubbers at the four corners fixed each magnetic disk drive 1 is provided on this printed circuit board 2. And the vibration proof rubbers 4 are fitted in these holes 3. This vibration proof rubbers 4 are positioned on the mounting position of said magnetic disk drive 1 and the printed circuit board 2, as shown in Fig. 6A. The vibration proof rubbers 4 are to buffer the vibration and shock occurred on the inside and outside of said magnetic disk drive 1. This magnetic disk drive 1 is mounted to said vibration proof rubbers 4 with the stud bolts (mounting material) 5.

In this way, the vibration proof model diagram in the case where the magnetic disk drive 1 is positioned to the printed circuit board 2 with the vibration proof rubbers 4 at the position of the four corners of the magnetic disk drive 1, is shown in Fig. 6B. As is apparent from this model, the drive 1 is rotated around the center of gravity G of the drive 1 by the reaction of the rotation of the actuator 41, in the case where the access operation of the magnetic disk drive 1 is performed.

The rotation of this drive 1 causes to loose the stability for controlling the actuator 41 and delay the convergence of the vibration after accessed. Hereupon, this vibration proof rubber 4 serves for buffering the vibration occurred by this rotation.

Further, the flexible cable 6 for extracting the control signal or the recording/reproducing signal of the magnetic disk drive 1 is provided at one end of the magnetic disk drive 1. This flexible cable 6 is connected to the connector 7 provided on said printed circuit board 2.

As shown in Fig. 5, on the rear side of the printed circuit board 2, the control circuit 32 of each magnetic disk drive 1 is fixed on the position corresponding to the position of each magnetic disk drive 1. This control circuit 32 has a recording/reproducing circuit 33, a driving/controlling circuit 34 for driving and controlling the actuator and spindle motor, a controller 35 of these circuits and an interface control circuit 36.

These circuits 33∼36 are fixed at the rear surface of the printed circuit board 2, as shown in Figs. 5 and 7. And these circuits 33∼36 are connected by the wiring pattern of the printed circuit board 2 and connected to the magnetic disk drive 1 with said connector 7.

Further, the control circuit 32 is connected by the data address bus 37 formed as the wiring pattern of the printed circuit board 2, and connected to a surface connecting pass 38. The control circuit 32 is connected to the interface circuit 31 of the printed circuit board 2 of Figs. 3 and 4 by the wiring pattern of the printed circuit board 2, via this surface connecting pass 38.

This interface circuit 31 which is constituted of four LSIs is connected to the card edge connectors 8a and 8b by the wiring pattern, in Fig. 3. These card edge connectors 8a and 8b are made by dividing one connector in two parts of the connector 8a having short width and the connector 8b having long width. This is because of preventing from missing the insert direction of the printed circuit board 2.

In this way, the array disk board is constituted by fixing the plural magnetic disk drives 1 to a sheet of the printed circuit board 2. Accordingly, it becomes possible to improve the mounting density and reduce the size of the apparatus, because there is no need to use the mounting flame and the like on each magnetic disk drives 1, respectively. It further becomes possible to reduce the number of the structural materials and improve the apparatus at lower cost, as it is not required to use the material of the mounting flame and the like. It furthermore becomes possible to mount to the locker only by inserting to the board.

This magnetic disk drive 1 is a magnetic disk drive of 2.5 inch. The weight of the disk drive is 210 g, so that the total weight of the nine magnetic disk drives is about 1.8 kg. Accordingly, it can support enough even if the printed circuit board 2 is the extent of 2 mm in thickness.

Further, even if it is the magnetic disk drive of 2.5 inch, the magnetic disk drive of 64 M byte which is formed as the thin type has the same length and width, but the thickness of the drive is 12.5 mm and the weight is 140 g, so that the thinner printed circuit board can be used.

Even if this magnetic disk drive 1 is a standard type of 3.5 inch (1050 M byte), the drive is 101 mm long, 146 mm wide and the extent of 41.4 mm in thickness, and the weight of the drive is the extent of 1 kg. Accordingly, the disk array apparatus having the four data disks and one spare disk can be supported enough with the printed circuit board having the thickness of the extent of 2 mm.

Further, the magnetic disk drive 1 which is a thin type of 3.5 inch (500 M byte) is 101 mm long, 146 mm wide, and the extent of 25.4 mm in thickness, and the weight of the drive is the extent of 800 g. Accordingly, even if it has nine apparatuses, it can be supported enough with the thinner and smaller printed circuit board.

Therefore, it is preferably desired that the magnetic disk drive fixed on the printed circuit board 2 is the magnetic disk drive which is 3.5 inch or below.

Also, the magnetic disk drive 1 is vibrated with the seek operation of the actuator. When the vibration is given from the external portion to the drive 1 at on-track actuation, it becomes off-track, so that it becomes impossible to record and reproduce. Thus, buffering of the vibration and the shock is performed by mounting the magnetic disk drive 1 via the vibration proof materials 4 to the printed circuit board 2.

And, the control circuit 32 of the magnetic disk drive 1 is fixed on this support plate 2, by constituting the support plate with the printed circuit board. Accordingly, the control printed circuit board of each magnetic disk drive 1 becomes useless, thus reducing the number of structural material1s much more.

Further, in the case where the magnetic disk drive 1 which is less than 3.5 inch is used, it becomes possible to support easily, even if it is fixed to the printed circuit board 2 having the extent of 2mm in thickness and the like, because the magnetic disk drive which is 3.5 inch is 1 kg or below in weight. Furthermore, the thinner printed circuit board 2 can be used, because the weight of the drive which is less than 3.5 inch is lighten. Herewith, the board fixed the magnetic disk drive 1 is also lighten, thus handling easily to release and set to the apparatus.

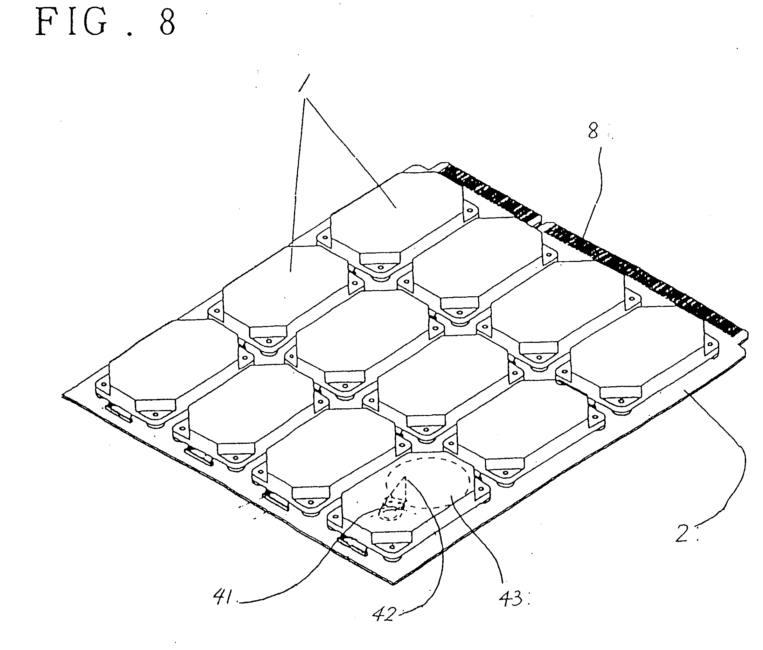

Fig. 8 is a diagram showing the modification of the disk storage board of the present invention. In this diagram, the twelve magnetic disk drives 1 are fixed on the printed circuit board 2. In this way, the magnetic disk drives 1 may be fixed on the full surface of the printed circuit board 2.

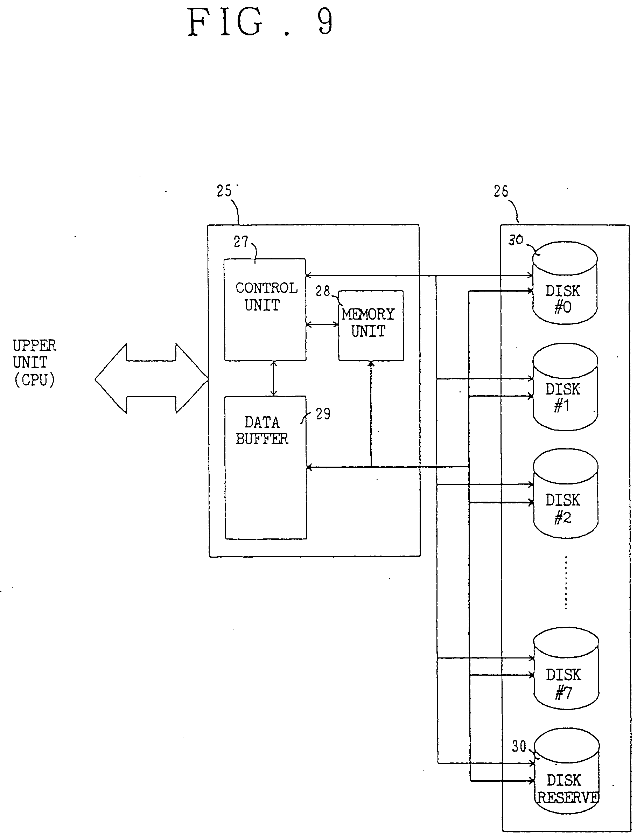

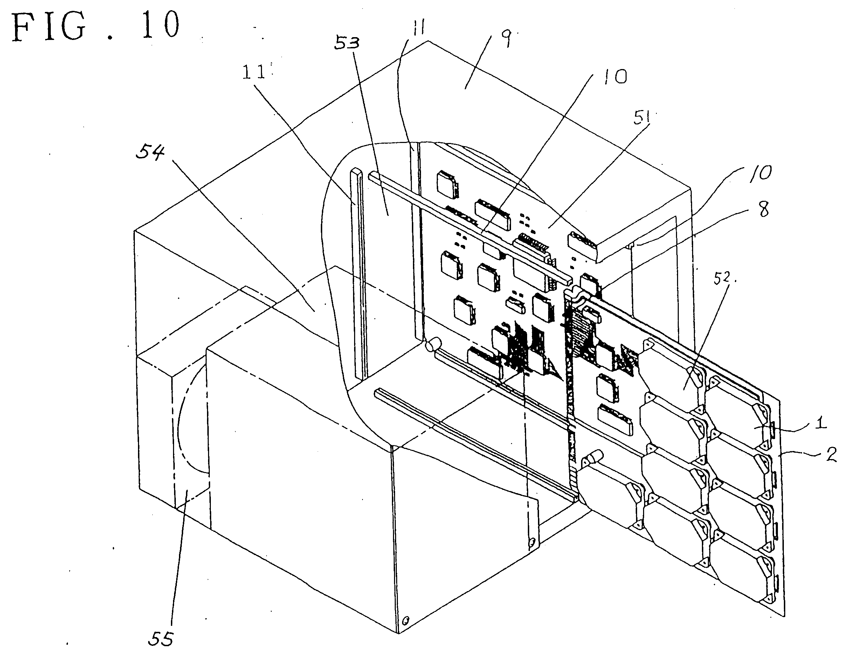

Fig. 9 is a block diagram of the array disk apparatus as one example of the assembly type disk storage apparatus of the present invention, and Fig. 10 is a perspective view of the array disk apparatus.

In Fig. 9, the array disk controller 25 controls the array disk assembly 26 in parallel, according to the instruction of the upper apparatus, for example, CPU. This array disk controller 25 has a control apparatus 27 for controlling the operation of the array disk assembly 26, a data buffer 29 for performing to receive the data by synchronizing with the upper apparatus and a memory apparatus 28 for evacuating the data temporarily at the time, for example, the time when the disk is broken.

The array disk assembly 26 has the nine magnetic disk drives 30 and the controller (the data recording/reproducin g circuit, the interface circuit and so on). The eight disk drives for recording and reproducing the data and one disk drive for performing back-up on the time of fault are used in the nine disk drives.

As well known, this array disk apparatus divides the transfer data from the upper apparatus into the eight disk drives, writes them and transfers the data combined the data of the 8 disk drives to the upper apparatus. That means, it controls the 8 disk drives in parallel, records the data in parallel, reads out it in parallel, thus improving to make speed up the data transfer.

When one disk in eight disks for recording and reproducing the data is broken, the data stored in the broken disk is evacuated to the memory apparatus 28, temporarily. After that, the data is restored from the memory apparatus 28 to the spare disk, so that the operation is continued by using the spare disk, instead of the broken disk. Further, when the broken disk is recovered, the data stored in the spare disk is restored to the recovered disk and the normal operation is performed by using this recovered disk.

The structure of such array disk apparatus is explained infra Fig. 10.

In Fig. 10, the connecting board 53 providing the connecting pattern on the rear surface of the system locker 9 is provided. A pair of I/O connectors 11 are provided on this connecting board 53. A pair of first slide guides 10 for the array disk board 52 and a pair of second slide guides 10 for the array disk control board are provided on the top and bottom surfaces of the system locker 9. Further, a power source apparatus 54 for supplying power and a fun apparatus 55 for air-cooling the inner of the locker are provided on the system locker 9.

On the other hand, the array disk board 52 is a printed circuit board 2 fixed the nine magnetic disk drives 1, as the above-described infra Fig. 3, having the card edge connector 8 at the end of the apparatus. Further, the array disk control board 51 is fixed each circuit of the array disk control apparatus 25 of Fig. 9 on the printed circuit board, having the card edge connector 8 at the end of the apparatus, as well as the array disk board 52.

On this structure, the array disk board 52 is fitted and inserted to the slide guide 10. And it is completed to set the board to the locker 9, by inserting the card edge connector 8 at the end of the apparatus to the I/O connector 10. In opposite, it is performed to release the board from the locker 9, by pulling out the array disk board 52, releasing the card edge connector 8 at the end of the apparatus from the I/O connector 10 and pulling it out along the slide guide 10. Thus, it becomes possible not only to reduce time requiring for assembling, breaking and diagnosis and the like of each magnetic disk drive 1 of the array disk, but it also becomes possible to exchange the drive easily.

Further, the array disk control board 51 is handled as same as the array disk board 52. Accordingly, it becomes possible not only to reduce time requiring for assembling, breaking and diagnosis and the like of each magnetic disk drive 1 of the array disk, but it also becomes possible to exchange the disk easily.

Moreover, it becomes possible to reduce the size of the apparatus because the mounting efficiency is improved. Furthermore, it becomes possible to reduce the number of the materials and lower the cost of the apparatus by improving to reduce the time requiring for assembling.

In this way, as the controller 25 is also constituted of the control board 51 and mounted to the locker 9, the controller can be mounted as the same style of the board of the magnetic disk drive and it can be made the structure of the controller simple, thus simplifying to handle the apparatus.

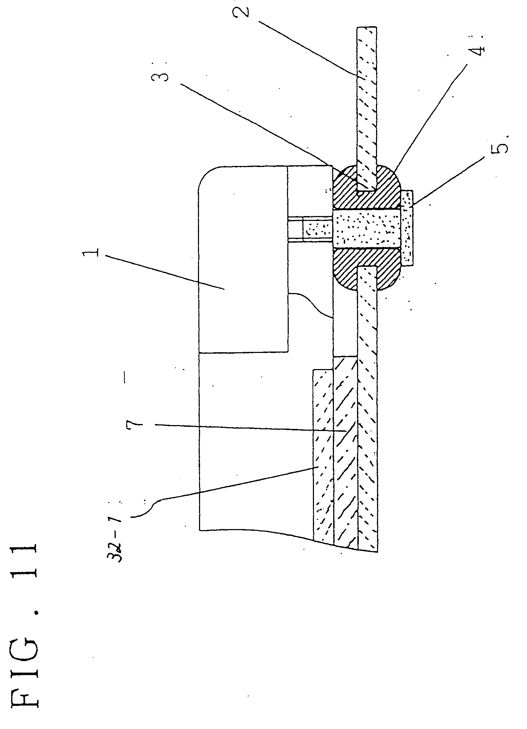

Fig. 11 is a cross section of other modification of the disk storage board of the present invention.

In this embodiment, the control printed circuit board 32-1 for mounting the control circuit 32 of the magnetic disk drive 1 is provided at the lower portion of the magnetic disk drive 1. And the control printed circuit board 32-1 is connected to the wiring pattern of the printed circuit board 2 by connecting to the connector 7. That is, the control printed circuit board 32-1 is provided to each magnetic disk drive 1 individually, without mounting the control circuit 32 to the printed circuit board 2.

When the above-described interface circuit 31 is also mounted on a printed circuit board, the mounted printed circuit board 2 can be used only by providing the wiring pattern. Therefore, the material having high rigidity, for example, a metal, not only an insulating resin can be used. Accordingly, it becomes possible to improve the support strength still more.

Further, as the control printed circuit board 32-1 is provided individually, it becomes possible to break and diagnose the fault easily. Furthermore, only the printed circuit board of that section may be exchanged.

As other variation, the control printed circuit board 32-1 may be provided on the magnetic disk drive 1. Further, there is the control printed circuit board provided the controller into the magnetic disk drive 1 (refer to the specification of International Patent Application No. PCT/JP/92/01356), and the plate is also provided as same as that case.

Hereupon, in the case the wiring pattern of the mounted printed circuit board is constituted of the flexible cable, the support plate having the wiring pattern is not required. Therefore, the support plate 2 can have a free structure, thus using the plate which is low price.

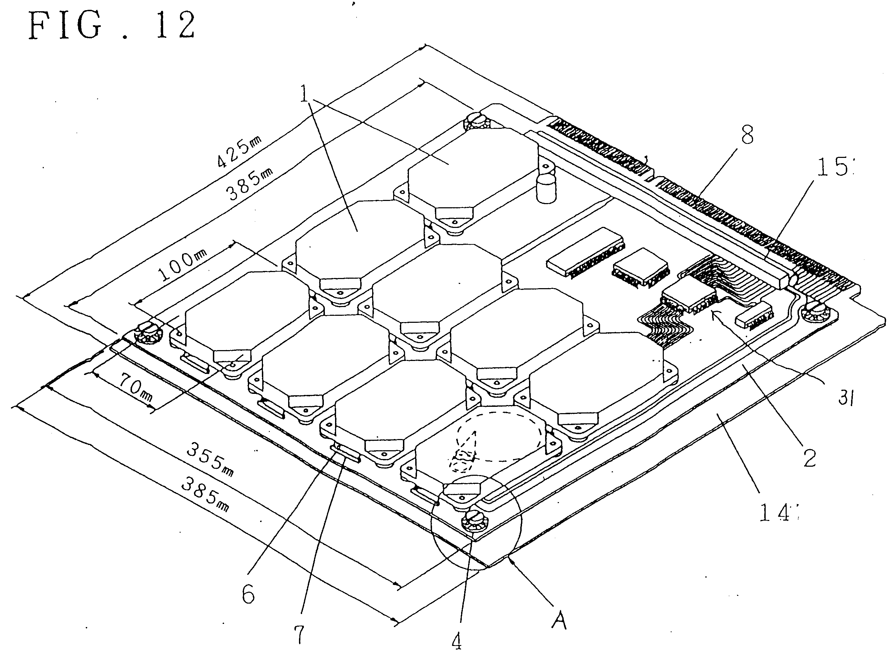

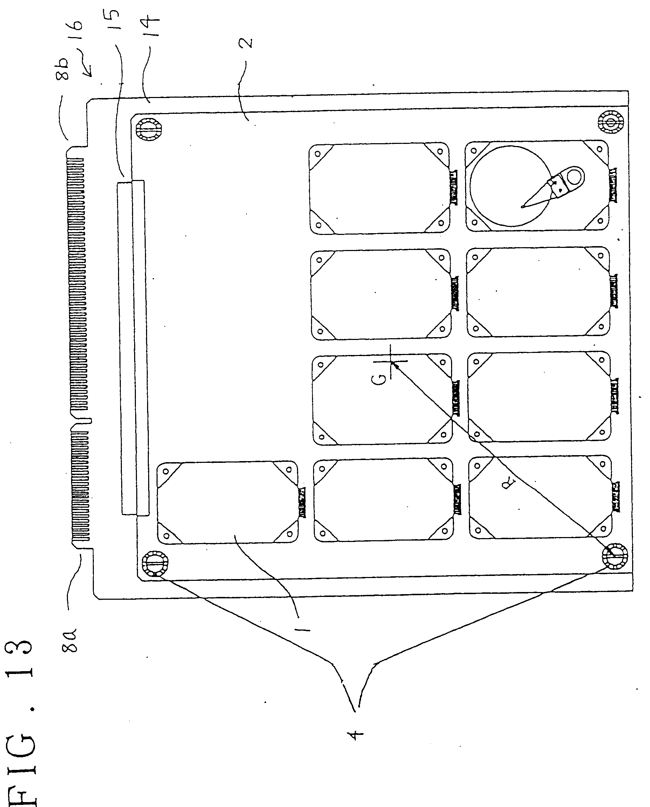

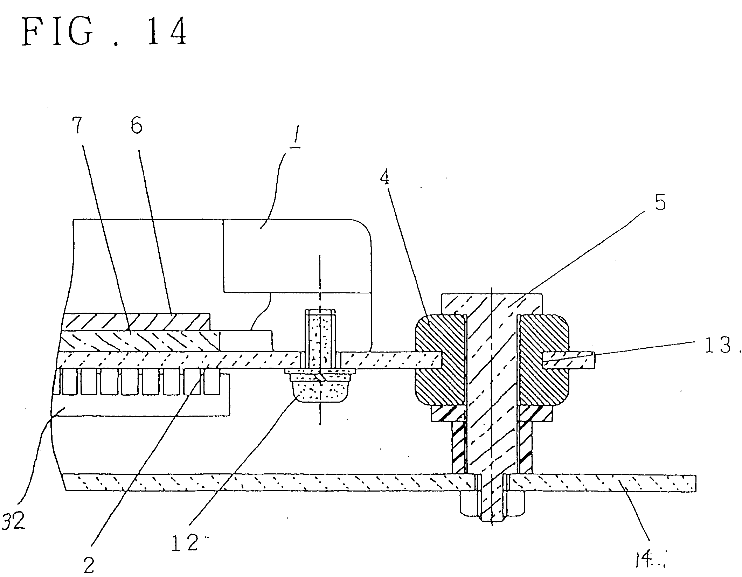

Fig. 12 is a perspective view of other modification of the disk storage board of the present invention, Fig. 13 is a top view of Fig. 12, and Fig. 14 is an A sectional cross view of Fig. 12.

In Fig. 10, numeral "1" is the above-described magnetic disk drive. This magnetic disk drive 1 is the magnetic disk drive of 2.5 inch having the same structure as shown in Fig. 6A. Numeral "2" is a printed circuit board, which is 385 mm long, 355 mm wide, and 1.6 mm in thickness. Accordingly, the printed circuit board 2 has enough size to fix a plural of magnetic disk drives 1 which have the above-described size.

As shown in Figs. 12 and 13, the nine magnetic disk drives 1 are mounted on this printed circuit board 2. Further, the printed circuit board 2 is fixed the interface circuit 31 for said magnetic disk drives 1.

"14" is a sub printed circuit board, which is 425 mm long, 385 mm wide and 1.6 mm in thickness. The printed circuit board 14 has card edge connectors 8a and 8b for connecting to the external portion electrically at one end.

As shown in Fig. 14, which is an A-sectional magnifying diagram of Fig. 12, the magnetic disk drive 1 is mounted to this printed circuit board 2 with the fixed screw 12. Further, holes 13 for fitting the vibration proof rubbers are provided at four corners of this printed circuit board 2. And the vibration proof rubbers 4 are fitted into these holes 13. These vibration proof rubbers 4 are positioned to the mounting portion of said sub printed circuit board 14 and the printed circuit board 2. And the vibration proof rubbers 4 are to buffer the vibration and shock occurred inside and outside of said magnetic disk drive 1. This printed circuit board 2 is mounted to the vibration proof rubber 4 with the stud bolt 5, for the sub printed circuit board 14.

In this way, the center of gravity G of each drive 1 is adjacent the center of the printed circuit board 2, as shown in Fig. 13, according to mounting the four corners of the printed circuit board 2 fixed the magnetic disk drive 1 to the sub printed circuit board 13 with the vibration proof rubber 4. The more rotation of this drive 1 becomes larger, the less the distance r from the center of gravity G of the drive to the vibration proof rubbers 4 is shorter or the less the mass m is smaller, in the case where the inertial moment of the actuator is as same as the access control and the characteristic of the vibration rubber 4 is same.

Hereupon, in this embodiment, the center of gravity of the drive becomes the center of gravity G of the whole array disk board, and the distance to the vibration rubbers 4 is longer in comparison with the embodiment in Fig. 3, apparently. Further, as compared with the mass, the mass of the embodiment of Fig. 3 is for one drive. In opposite, the mass of this embodiment is for the whole array disk board. Therefore, in this embodiment, efficiency of the rotation at the time for access can be reduced larger.

As shown in Figs. 12 and 14, the flexible cable 6 for extracting the control signal of the drive and the recording/reproducing signal is provided from one end of the magnetic disk drive 1. This flexible cable 6 is connected to the connector 7 which is provided on said printed circuit board 2.

As same as Fig. 5, the control circuit 32 of each magnetic disk drive 1 is fixed at the position corresponding to the positions of each magnetic disk drives 1 on the rear surface of the printed circuit board 2. These circuits are connected with the wiring pattern of the printed circuit board 2 and connected the magnetic disk drive 1 with said connector 7, as shown in Fig. 14.

Further, each control circuit 32 is connected by the data address bus 37 formed as a wiring pattern of the printed circuit board 2 and connected to the surface connecting pass 38. This surface connecting pass 38 is connected to the interface circuit 31 of the printed circuit board 2 of Fig. 12 with the wiring pattern of the printed circuit board 2.

This interface circuit 31 is constituted of four LSIs in the diagram. And the interface circuit 31 is connected to the card edge connectors 8a and 8b of the sub printed circuit board 14 via the wiring pattern and the flexible cable 15. This card edge connectors 8a and 8b are divided one connector into two section of the connector 8a having short width and the connector 8b having long width. This is because of preventing from missing the inserting direction of the printed circuit board 2.

In this way, the array disk board 16 is constituted by fixing the plural magnetic disk drives 1 to a sheet of the printed circuit board 2 and mounting this printed circuit board 2 to the sub printed circuit board 14. Accordingly, as there is no need to use the mounting flame and the like to each magnetic disk drives 1 respectively, it becomes possible to improve the mounting density and reduce the size of the apparatus. Furthermore, as there is no need to use the material, for example, the mounting flame, it can be possible to reduce the number of the structural materials and improve to reduce the cost of the apparatus. And the magnetic disk drives are also be able to mount to the locker, only by inserting the board, as the latter-described.

Further, the strength of the whole support plate can be improved by the sub printed circuit board 14. Moreover, the number of the vibration proof rubbers 4 provided per each magnetic disk drive 1 reduce one ninths. In addition, the efficiency of buffering by the vibration proof rubbers 4 is also be able to improved.

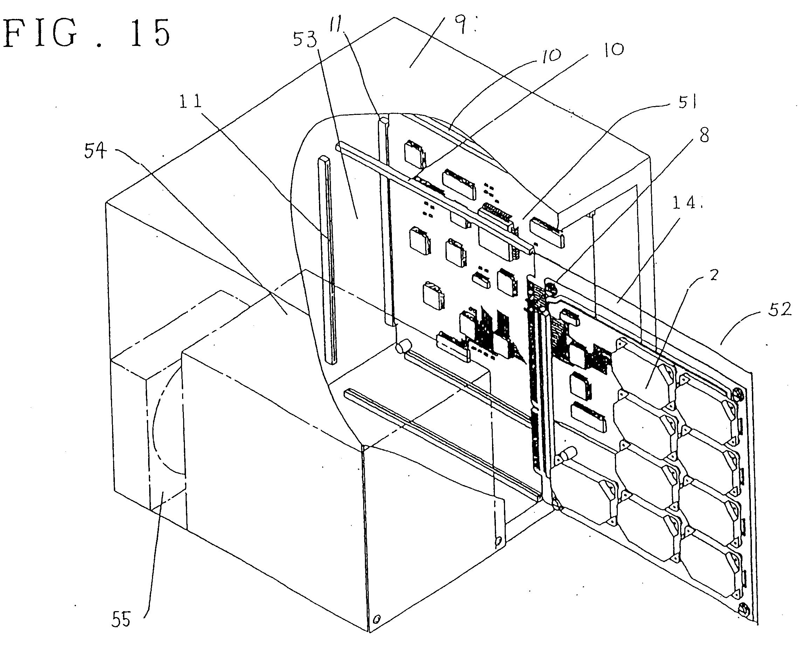

Fig. 15 is a diagram showing the modification of the array disk apparatus applied the disk storage board in Fig. 12.

In Fig. 15, the connecting board 53 providing the connecting pattern is provided on the rear surface of the system locker 9. A pair of the first I/O connector and the second I/O connector 11 are provided on this connecting board 53. A pair of the first slide guides 10 for the array disk board 52 and a pair of the second slide guides 10 for the array disk control board 51 are provided on the top surface and the bottom surface of the system locker 9. Further, the power source apparatus 54 for supplying power and the fun apparatus 55 for air-cooling the inner of the apparatus are provided.

On the other hand, the array disk board 52 is the sub printed circuit board 14 mounted the printed circuit board 2 which is fixed the nine magnetic disk drives 1 as above-explained according to Fig. 12, having the card edge connector 8 at the end of the board. Further, the array disk control board 51 is to fix each circuit of the array disk control apparatus 25 in Fig. 9 to the printed circuit board, having the card edge connector 8 at the end of the board in the same way.

On this structure, the array disk board 52 is fitted and inserted to the slide guides 10. And it is completed to mount the board to the locker 9, by inserting the card edge connector 8 at the end of the board to the I/O connector 10. In opposite, it is performed to release the board from the locker 9, by pulling out the array disk board 52, releasing the card edge connector 8 from the I/O connector 10 and pulling it out along the slide guides 10. Thus, it becomes possible not only to reduce time requiring for assembling, breaking and diagnosis and the like of each magnetic disk drive 1 of the array disk, but it also becomes possible to exchange the drive easily.

Further, the array disk control board 51 is handled as same as the array disk board 52. Accordingly, it becomes possible not only to reduce time requiring for assembling, breaking and diagnosis and the like of each magnetic disk drive 1 of the array disk, but it also becomes possible to exchange the drive easily.

Moreover, it becomes possible to reduce the size of the apparatus, because the mounting efficiency is improved. Furthermore, it becomes possible to reduce the number of the materials and the cost of the apparatus improved by reducing time requiring for assembling.

The present invention may further be modified as follows;

At first, although the magnetic disk drive of 2.5 inch is described, the magnetic disk drive of 3.5 inch or below, for example, 3.5 inch, 1.8 inch, may be applied. At second, although the magnetic disk drive is explained, the optical disk drive, the optical magnetic disk drive and the like may be applied. At third, the control printed circuit board used in the embodiment of Fig. 11 may be applied to the board used in the embodiment of Fig. 12.

At fourth, although the array disk apparatus is explained as the assembly type disk storage apparatus, other assembly type disk storage apparatus can be applied. At fifth, the nine disk drives are fixed on a sheet of printed circuit board, the number for fixing on a sheet of printed circuit board can be selected suitably.

Although the present invention has been described by way of embodiments, it should be noted that the present invention may be modified in various forms without departing from the sprit or scope of the invention.

As above-described, it becomes possible to reduce the space of each disk storage drive, as a plural of disk storage drives are fixed on a sheet of support plate, according to the present invention. It also becomes possible to reduce the mounting space and reduce the size of this assembly type disk storage apparatus, as there is no need to use the mounting flame and the like.

It further becomes possible to reduce the number of the materials, reduce time requiring for mounting at same time, and improve the apparatus which is low cost, because there is no need to use the mounting flame and the like. As the card edge connector 8 is provided on the support plate, it furthermore becomes possible to connect electrically to the external portion with the support plate, thus mounting by the insertion of the board.

## Claims

1. An assembly type disk storage board comprising:
a plurality of disk storage drives (1), each disk storage drive having a rotating storage disk (43), a head (42) for reproducing date from said storage disk, and an actuator (41) for positioning said head with respect to said storage disk,
a support plate (2) mounting said plural disk storage drives and having a connector (8a,8b) which connects said plural disk storage drives to the external device.

2. An assembly type disk storage board according to claim 1, comprising:
a plurality of vibration proof materials (4) provided between said plural disk storage drives (1) and said support plate (2).

3. An assembly type disk storage board according to claim 1, comprising:
a plurality of control circuits (32), each control circuit provided on said support plate (2) for controlling each disk storage drive (1), respectively.

4. An assembly type disk storage board according to claim 3,
wherein said plural disk storage drives (1) are provided on one surface of said support plate (2), and
said plural control circuits (32) are provided on the opposite surface of said support plate.

5. An assembly type disk storage board according to claim 3,
wherein each control circuit (32) is respectively disposed on a portion of said support plate (2) where the corresponding disk storage drive (1) is mounted.

6. An assembly type disk storage board according to claim 3. comprising:
a plurality of connectors (38), each connector for electrically connecting each disk storage drive (1) to the corresponding control circuit (32).

7. An assembly type disk storage board according to claim 1, comprising:
a plurality of connectors (7), each connector for electrically connecting each disk storage drive (1) to said support plate (2) respectively.

8. An assembly type disk storage board according to claim 1, comprising:
an interface circuit (31) provided on said support plate (2) for controlling data transfer between said plural disk storage drives (1) and the external device.

9. An assembly type disk storage board according to claim 1, comprising:
a plurality of control printed circiut boards (32-1), each control printed circuit board mounted on said disk storage drive (1) respectively for controlling the corresponding disk storage drive.

10. An assembly type disk storage board according to claim 9, comprising:
a plurality of connectors (7), each connector for electrically connecting each control printed circuit board (32-1) to said support plate (2) respectively.

11. An assembly type disk storage board according to claim 1,
wherein said support plate (2) is a printed circuit board.

12. An assembly type disk storage board according to claim 1,
wherein said disk storage drive (1) is a disk storage drive of 3.5 inch or below.

13. An assembly type disk storage board according to claim 1, comprising:
a plurality of vibration proof materials (4), each vibration proof material provided between each disk storage drive (1) and said support plate (2), and
a plurality of control circuit boards, each control circuit (32) provided on said support plate (2) for controlling each disk storage drive respectively.

14. An assembly type disk storage board according to claim 1, comprising:
a plurality of vibration proof materials (4), each vibration proof material provided between each disk storage drive (1) and said support plate (2), and
a plurality of control printed circuit boards (32-1), each control printed circuit board mounted on said disk storage drive respectively for controlling the corresponding disk storage drive.

15. An assembly type disk storage board according to claim 1,
wherein said support plate (2) includes a first support plate mounting said plural disk storage drives and a second support plate mounting said first support plate via the vibration proof material (4) and having said connector (7).

16. An assembly type disk storage board according to claim 15,
wherein said assembly type disk storage board further comprising:
a cable (6) for electrically connected said first support plate to the connector of said second support plate.

17. An assembly type disk storage board according to claim 15, comprising:
a plurality of connectors (7) each connector for electrically connecting each disk storage drive (1) to said first support plate respectively.

18. An assembly type disk storage board according to claim 15, comprising:
a plurality of control circuits (32), each control circuit provided on said support plate (2) for controlling each disk storage drive (1) respectively.

19. An assembly type disk storage board according to claim 18,
wherein said plural disk storage drives (1) are provided on one surface of said support plate (2), and
said plural control circuits (32) are provided on the opposite surface of said support plate.

20. An assembly type disk storage board according to claim 18,
wherein each control circuit (32) is respectively disposed on a portion of said support plate (2) where the corresponding disk storage drive (1) is mounted.

21. An assembly type disk storage board according to claim 18, comprising
a plurality of connectors (38) each connector for electrically connecting each disk storage drive (1) to the corresponding control circuit (32).

22. An assembly type disk storage board according to claim 15, comprising:
an interface circuit (31) provided on said support plate (2) for controlling data transfer between said plural disk storage drives (1) and the external device.

23. An assembly type disk storage board according to claim 15, comprising:
a plurality of control printed circuit boards (32-1), each control printed circuit board mounted on said disk storage drive (1) respectively, for controlling the corresponding disk storage drive.

24. An assembly type disk storage board according to claim 23, comprising:
a plurality of connectors (7), each connector for electrically connecting each control printed circuit board (32-1) to said support plate (2) respectively.

25. An assembly type disk storage apparatus comprising:
a locker (9) having a first connector (53) and a guide;
a plurality of disk storage drives (1), each disk storage drive having a rotating storage disk (43), a head (42) for reproducing data from said storage disk, and an actuator (41) for positioning said head with respect to said storage disk,
a support plate (2) being mounted on the guide, for mounting drives, and having second connector (8) which connects with the first connector (53),
guides (10) provided on said locker to guide said support plate, and
a connector (11) provided on said locker to connect with said card edge connector (8) of said support plate.

26. An assembly type disk storage apparatus according to claim 25, comprising:
a control board (51) mounted the controller for controlling said plural disk storage drives (1), and having a third connector,
a second guide (10) provided on said locker (9) for guiding said control board, and
a fourth connector provided on said locker for connecting to the third connector of said control board.

27. An assembly type disk storage apparatus according to claim 25, further comprising:
a plurality of control circuits (32), each control circuit provided on said support plate (2) for controlling each disk storage drive (1) respectively.

28. An assembly type disk storage apparatus according to claim 27,
wherein said plural disk storage drives (1) are provided on one surface of said support plate (2), and
said plural control circuits (32) are provided on the opposite surface of said support plate.

29. An assembly type disk storage apparatus according to claim 27,
wherein each control circuit (32) is respectively disposed on a portion of said support plate (2) where the corresponding disk storage drive (1) is mounted.

30. An assembly type disk storage apparatus according to claim 27, further comprising:
a plurality of fifth connectors (38), each fifth connector for electrically connecting each disk storage drive (1) to the corresponding control circuit (32).

31. An assembly type disk storage apparatus according to claim 25, further comprising:
a plurality of fifth connectors (7), each fifth connector for electrically connecting each disk storage drive (1) to said support plate (2) respectively.

32. An assembly type disk storage apparatus according to claim 25, further comprising:
an interface circuit (31) provided on said support plate (2) for controlling data transfer between said plural disk storage drives (1) and the external divice.

33. An assembly type disk storage apparatus according to claim 25, comprising:
a plurality of control printed circuit boards (32-1), each control printed circuit board mounted on said disk storage drive (1) respectively for controlling the corresponding disk storage drive.

34. An assembly type disk storage apparatus according to claim 33, further comprising:
a plurality of fifth connectors (7), each fifth connector for electrically connecting each control printed circuit board (32-1) to said support plate (2) respectively.

35. An assembly type disk storage apparatus according to claim 25,
wherein said support plate (2) is a printed circuit board.

36. An assembly type disk storage apparatus according to claim 25,
wherein said disk storage drive (1) is a disk storage drive of 3.5 inch or below.

37. An assembly type disk storage apparatus according to claim 25.
wherein said support plate (2) includes a first support plate mounting said plural disk storage drives (1) and a second support plate mounting said first support plate via the vibration proof material (4) and having said second connector.

38. An assembly type disk storage apparatus according to claim 37,
wherein said assembly type disk storage apparatus further comprising:
a cable (6) for electrically connected said first support plate to the second connector of said second support plate.

39. An assembly type disk storage apparatus according to claim 15, further comprising:
a pluralilty of fifth connectors (7), each fifth connector for electrically connecting each disk storage drive (1) to said first support plate (2) respectively.

40. An assembly type disk storage apparatus according to claim 25, further comprising:
a plurality of control circuits (32), each control circuit provided on said support plate (2) for controlling each disk storage drive (1) respectively.

41. An assembly type disk storage apparatus according to claim 40,
wherein said plural disk storage drives (1) are provided on one surface of said support plate (2), and
said plural control circuits (32) are provided on the opposite surface of said support plate.

42. An assembly type disk storage apparatus according to claim 40,
wherein each control circuit (32) is respectively disposed on a portion of said support plate (2) where the corresponding disk storage drive (1) is mounted.

43. An assembly type disk storage apparatus according to claim 40, further comprising:
a plurality of fifth connectors (38), each fifth connector for electrically connecting each disk storage drive (1) to the corresponding control circuits (32).

44. An assembly type disk storage apparatus according to claim 37, further comprising:
an interface circuit (31) provided on said support plate (2) for controlling data transfer between said plural disk storage drives (1) and the external device.

45. An assembly type disk storage apparatus according to claim 37, further comprising:
a plurality of control printed circuit boards (32-1), each control printed circuit board mounted on said disk storage drive (1) respectively for controlling the corresponding disk storage drive.

46. An assembly type disk storage apparatus according to claim 45, further comprising:
a plurality of fifth connectors (7), each fifth connector for electrically connecting each control printed circuit board (32-1) to said support plate (2) respectively.
